(19) Europäisches Patentamt
European Patent Office
Office européen des brevets

(11) **EP 2 683 564 B1**

(12) **EUROPÄISCHE PATENTSCHRIFT**

(45) Veröffentlichungstag und Bekanntmachung des Hinweises auf die Patenterteilung:
**23.11.2016   Patentblatt 2016/47**

(21) Anmeldenummer: **12707595.0**

(22) Anmeldetag: **07.03.2012**

(51) Int Cl.:
***B60H 1/00*** (2006.01)

(86) Internationale Anmeldenummer:
**PCT/EP2012/053927**

(87) Internationale Veröffentlichungsnummer:
**WO 2012/120047 (13.09.2012 Gazette 2012/37)**

(54) **LUFTUMLENKELEMENT MIT EINER STRÖMUNGSOPTIMIERTEN KONTUR FÜR EINE KLIMAANLAGE**

AIR-DIVERTING ELEMENT WITH A FLOW-OPTIMIZED CONTOUR FOR AN AIR-CONDITIONING SYSTEM

ÉLÉMENT DE DÉVIATION D'AIR DOTÉ D'UN CONTOUR À ÉCOULEMENT OPTIMISÉ POUR UN SYSTÈME DE CLIMATISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2011   DE 102011005181**

(43) Veröffentlichungstag der Anmeldung:
**15.01.2014   Patentblatt 2014/03**

(73) Patentinhaber: **MAHLE Behr GmbH & Co. KG**
**70469 Stuttgart (DE)**

(72) Erfinder:
 • **HEILEMANN, Jürgen**
   **73240 Wendlingen (DE)**
 • **MÜHLEISEN, Harald**
   **70771 Leinfelden-Echterdingen (DE)**
 • **VENEZIA, Vincenzo**
   **71106 Magstadt (DE)**
 • **LAUX, Holger**
   **78661 Dietingen (DE)**

(74) Vertreter: **Grauel, Andreas**
   **Grauel IP**
   **Patentanwaltskanzlei**
   **Wartbergstrasse 14**
   **70191 Stuttgart (DE)**

(56) Entgegenhaltungen:
   EP-A1- 1 514 708     DE-A1- 10 208 141
   US-A1- 2003 213 579     US-A1- 2004 029 520
   US-A1- 2005 247 445     US-A1- 2008 256 965

**Beschreibung**

Die Erfindung betrifft ein Luftumlenkelement mit einer strömungsoptimierten Kontur für eine Klimaanlage, insbesondere eines Kraftfahrzeuges, welches sich annähernd senkrecht zu einer Luftströmungsrichtung erstreckt, wie z.B. in US 2005/0247445 A1 offenbart.

In Klimaanlagen muss eine Luftströmung oftmals um ein Hindernis herumgeführt werden. Diese Hindernisse werden dabei durch spezielle Gehäusekonturen oder durch Lüftungsklappen gebildet, die den Luftstrom in eine bestimmte Richtung umlenken. Solche durch die Gehäusekontur bzw. die Luftführungsklappen gebildeten Umlenkstellen weisen dabei eine relativ einfache Form auf, indem sie kantig an ihren Umlenkstellen ausgebildet sind. Auf Grund dieser kantigen Ausgestaltung der Umlenkstellen kommt es an diesen Stellen zu Strömungsablösungen und zu Turbulenzen. Diese Turbulenzen führen zu einer erhöhten Geschwindigkeit, deren Folge ein Druckabfall der Luftströmung ist. Gleichzeitig treten auf Grund dieser Strömungsablösungen akustische Störungen auf.

Ein besonders hoher Druckverlust ist zu verzeichnen, wenn die Luftströmung um ein Luftumlenkelement herum geführt wird, welches die Luftströmung um 180° umlenken soll. Der hohe Druckverlust führt zu einer Reduzierung der Luftmenge und schlägt sich zusätzlich auch negativ in einer Schallproduktion nieder.

Der Erfindung liegt somit die Aufgabe zu Grunde, ein Luftumlenkelement mit einer strömungsoptimierten Kontur anzugeben, bei welchem, bei einer Umlenkung der Luftströmung um annähernd 180°, hohe Druckverluste unterbunden werden.

Erfindungsgemäß wird die Aufgabe dadurch gelöst, dass sich an ein Ende des Luftumlenkelementes eine annähernd parabelähnliche Verlängerung anschließt, welche der Seite des Luftumlenkelementes gegenüber liegt, die zu der Luftströmungsrichtung abgewandt ist. Dies hat den Vorteil, dass durch die optimierte Form des Luftumlenkelementes Strömungsabrisse und Turbulenzen der Luftströmung minimiert werden, wodurch die Strömungsgeschwindigkeit und somit der Druckverlust sowie akustische Störungen reduziert werden. Die Luftströmung kann somit ohne große Störungen um 180° umgelenkt werden.

Vorteilhafterweise ist ein Verhältnis eines breitesten Abstandes der parabelähnlichen Verlängerung zum Luftumlenkelement zum Abstand eines Scheitelpunktes der parabelähnlichen Verlängerung zu dem breitesten Abstand größer als 0,1. Eine solche Dimensionierung des Luftumlenkelementes erlaubt es, die Luftströmung um annähernd 180° umzulenken, wobei Totwasser bzw. Strömungsabrisse minimiert werden. Unter Totwasser wird dabei der Bereich des umströmten Luftumlenkelementes verstanden, in welchem fast keine Luftströmung nach der Umlenkung eintritt.

In einer Ausgestaltung ist die parabelähnliche Verlängerung integrierter Bestandteil des Luftumlenkelementes. Das Luftumlenkelement umfasst an seinem Ende eine Rundung, welche eine ungestörte Richtungsänderung der Luftströmung veranlasst. Da ein solches Luftumlenkelement gewöhnlich aus Kunststoff gefertigt wird, lässt sich die strömungsoptimierte Kontur des Luftumlenkelementes mit der parabelähnlichen Verlängerung einfach in einem Herstellungsprozess in nur einem Verfahrensschritt herstellen.

Die parabelähnliche Verlängerung ist zweiteilig aufgebaut, wobei ein erster Teil der Verlängerung, welcher den Scheitelpunkt einschließt, Bestandteil des Luftumlenkelementes ist, während ein zweites Teil der Verlängerung, welches sich an das erste Teil anschließt, von einem separaten Luftführungselement gebildet ist. Somit kann das Luftumlenkelement auf Grund der bei der vorliegenden Anwendung vorgegebenen Anforderungen entsprechend optimiert werden und mit einem zweiten Luftführungselement kombiniert werden, welches darüber hinaus zusätzliche Aufgaben innerhalb der Klimaanlage wahrnehmen kann.

In einer Weiterbildung ist das Luftführungselement in einem von dem Luftumlenkelement und der parabelähnlichen Verlängerung gebildeten Zwischenraum angeordnet, wobei eine Außenkontur des Luftführungselementes den zweiten Teil der parabelähnlichen Verlängerung bildet. Dadurch wird eine besonders platzsparende Anordnung für das Luftführungselement in der Klimaanlage ermöglicht, da das Luftführungselement an der Leeseite des Luftumlenkelementes angeordnet wird, die üblicher Weise als Totwasser bezeichnet wird. Da dieser Bereich nach der Umlenkung keine Luftströmung aufweist, ist dieser Bereich für die Platzierung des Luftführungselementes von besonderem Vorteil.

Das Luftführungselement ist als Lüftungsklappe ausgebildet, welche in geöffnetem Zustand einen Kanal zwischen dem Luftumlenkelement und einer Gehäusewand der Klimaanlage zur Umlenkung eines Luftstromes um annähernd 180° frei gibt. Durch die Anordnung einer Lüftungsklappe an der, zu der Luftströmung abgewandten Seite des Luftumlenkelementes wird eine besonders optimale Variante erreicht, bei welcher die Klimaanlage in ihren Abmaßen besonders klein gestaltet werden kann. Die Lüftungsklappe übernimmt dabei neben dem Öffnen und Schließen eines Kanals innerhalb der Klimaanlage gleichzeitig auch die Funktion der optimierten Führung der Luftströmung, um Strömungsablösungen und somit Druckabfall und einen Luftstromverlust zu unterbinden.

Zur optimalen Ausnutzung des nicht von der Luftströmung tangierten Zwischenraumes des Luftumlenkelementes ist eine Drehachse der Lüftungsklappe nahe dem Scheitelpunkt des ersten Teiles der parabelähnlichen Verlängerung axial zu diesem angeordnet.

Vorteilhafterweise ist die, das zweite Teil der parabelähnlichen Verlängerung bildende Außenkontur der Lüftungsklappe von einem Spoiler gebildet. Somit kann auf ein separates Element der parabelähnlichen Verlängerung verzichtet werden, da der Spoiler der Lüftungsklappe gleichzeitig die Aufgabe der parabelähnlichen Verlängerung wahrnimmt.

In einer weiteren Variante weist die Lüftungsklappe an einem, zu dem Spoiler entgegen gesetzten Ende eines, den Spoiler tragenden Flügels eine Dichtung auf. Dadurch kann der Kanal, welcher durch die Lüftungsklappe verschlossen werden soll, gegenüber der anstehenden Luftströmung zuverlässig abgedichtet werden.

In einer Weiterbildung ist das Luftumlenkelement, mit der, der parabelähnlichen Verlängerung abgewandten Seite, vor einem Heizelement der Klimaanlage angeordnet. Durch die annähernd senkrechte Stellung des Luftumlenkelementes zu der Luftströmung, welche aus dem Heizelement ausströmt, wird sichergestellt, dass die warme Luftströmung, die das Heizelement verlässt, mit einer kalten Luftströmung, welche oberhalb des Heizelementes entlang strömt, vermischt wird und diese gemischte Luftströmung durch das Luftumlenkelement um annähernd 180° in Richtung des Kanals der Klimaanlage umgelenkt wird.

Die Erfindung lässt zahlreiche Ausführungsformen zu. Eine davon soll anhand der in der Zeichnung dargestellten Figuren näher erläutert werden.

Es zeigt:

Figur 1: ein Ausführungsbeispiel des erfindungsgemäßen konturoptimierten Luftumlenkelementes in einer Klimaanlage mit einer Lüftungsklappe im geöffneten Zustand,

Figur 2: Ausführungsbeispiel nach Figur 1 mit der Lüftungsklappe im geschlossenen Zustand,

Figur 3: Abmaße des erfindungsgemäßen Lüftungselementes,

Figur 4: ein Ausführungsbeispiel für eine Lüftungsklappe mit einem Spoiler.

Gleiche Merkmale sind mit gleichen Bezugszeichen gekennzeichnet.

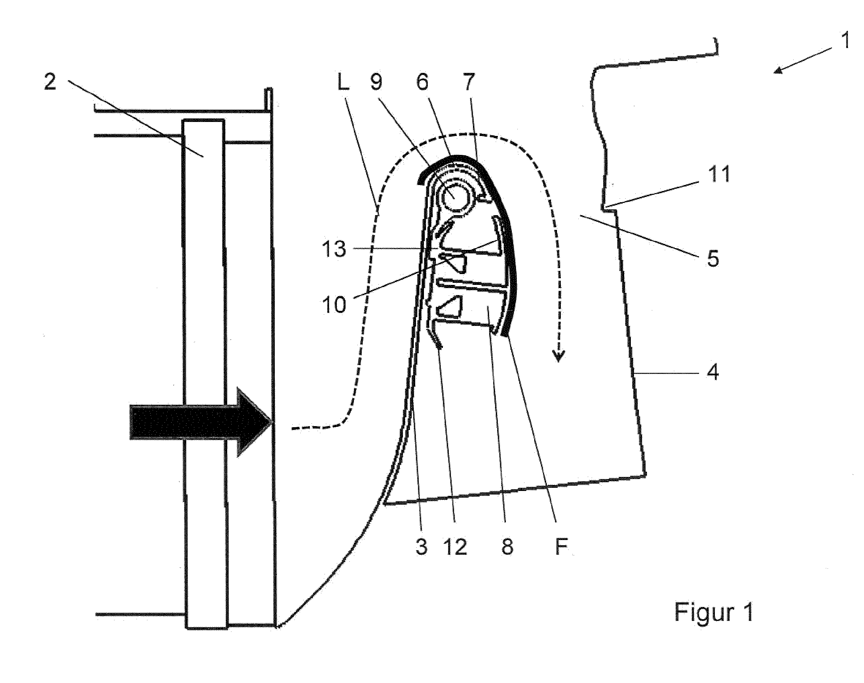

In Figur 1 ist ein Ausführungsbeispiel für ein erfindungsgemäßes Luftumlenkelement 3 dargestellt, welches in einer Klimaanlage 1, insbesondere für ein Kraftfahrzeug, angeordnet ist. Die Klimaanlage 1 umfasst dabei ein Heizelement 2, wobei das Luftumlenkelement 3 gegenüber dem Luftaustritt des Heizelementes 2 angeordnet ist. Das Luftumlenkelement 3 ist als gerade Wand ausgebildet, welche sich annähernd senkrecht zur Luftströmung erhebt, die aus dem Heizelement 2 ausströmt. Das Luftleitelement 3 bildet mit einer Gehäusewand 4, welche dem Luftleitelement 3 gegenüber liegt, einen Kanal 5.

Das Luftleitelement 3 weist dabei eine parabelähnliche Verlängerung auf, welche durch eine fiktive, nicht zum Luftleitelement 3 gehörende Kurve F zur besseren Verdeutlichung dargestellt ist. In der konkreten Ausführungsform ist das Luftleitelement 3 zweiteilig aufgebaut. Während das Luftleitelement 3 auf der, dem Heizelement 2 zugewandten Seite annähernd eben aufgebaut ist, schließt sich an seinem Ende eine Abrundung an, welche den Scheitelpunkt 6 der parabelähnlichen Verlängerung des Luftleitelementes 3 bildet. Der Scheitelpunkt 6 bildet mit einem ersten Teil der parabelförmigen Verlängerung 7, welches sich an den Scheitelpunkt 8 anschließt, einen integralen Bestandteil des Luftumlenkelementes 3.

Nahe dem Scheitelpunkt 6 des Luftleitelementes 3 ist eine Drehachse 9 einer Lüftungsklappe 8 gelagert, wobei die Drehachse 9 der Lüftungsklappe 8 sich axial zum Scheitelpunkt 6 erstreckt. Die Lüftungsklappe 8 ist dabei in dem Zustand dargestellt, in welchem der Kanal 5 geöffnet ist. Auf Grund der Anordnung der geöffneten Lüftungsklappe 8, auf der, der Luftströmung L abgewandten Seite des Luftumlenkelementes 3 ist die Lüftungsklappe 8 in einer Region gelagert, die von der umgelenkten Luftströmung L nicht berührt wird und deshalb als "Totwasser" bezeichnet wird. Im geöffneten Zustand liegt die Lüftungsklappe 8 annähernd an der eben ausgestalteten und dem Heizelement 2 abgewandten Seite des Luftumlenkelementes 3 an, wobei die Lüftungsklappe 8 einen Flügel 13 aufweist, auf welcher ein Spoiler 10 angeordnet ist. Dieser Spoiler 10 stellt eine Verlängerung des ersten Teils 7 der parabelähnlichen Verlängerung dar und ist somit als zweites Teil der parabelähnlichen Verlängerung anzusehen. Der Spoiler 10 bildet dabei in der Formung seiner Außenkontur eine Fortsetzung des ersten Teils 7 der parabelförmigen Verlängerung.

Aufgrund dieser Anordnung steigt die aus dem Heizelement 2 ausströmende aufgewärmte Luftströmung L an der eben ausgebildeten Wandung des Luftumlenkelementes 3 empor. Oberhalb des Heizelementes 2 fließt durch die Klimaanlage 1 ein nicht weiter gekennzeichneter, kalter Luftström, welcher sich mit der warmen Luftströmung L, die aus dem Heizelement 2 herausströmt, vermischt. Aufgrund der parabelähnlichen Formgebung des Luftleitelementes 3 wird die gemischte Luftströmung L um annähernd 180° umgelenkt und durch den Kanal 5 in weitere Teile der Klimaanlage 1 weitergeleitet. Durch die parabelähnliche Ausgestaltung des Luftumlenkelementes 3 wird in Kombination mit dem Spoiler 10 der Lüftungsklappe 8 die Funktion der Umlenkung der Luftströmung L mit der Klappenfunktion gekoppelt.

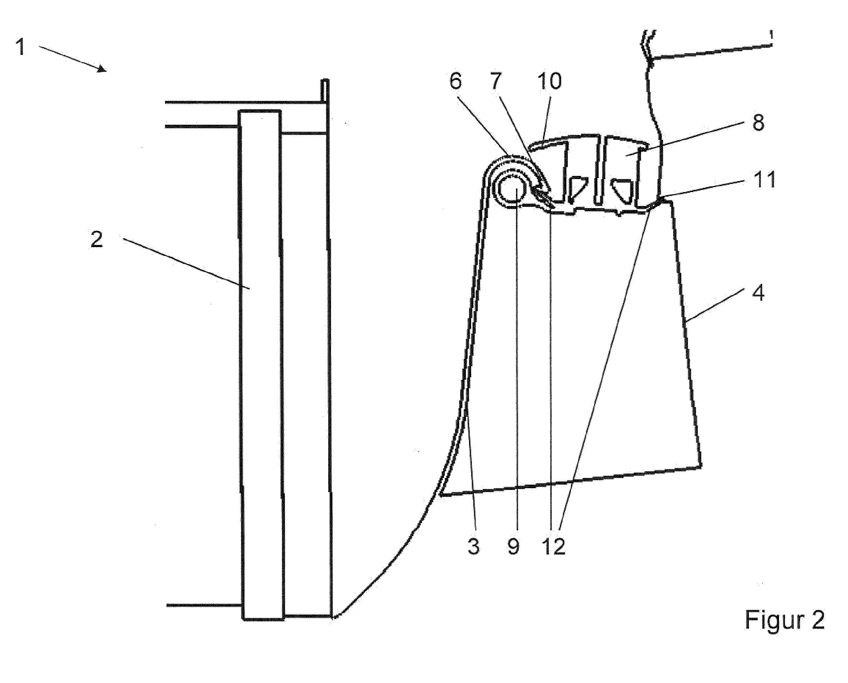

Figur 2 zeigt die Lüftungsklappe 8 in der Klimaanlage 1 in einer Schließfunktion, wobei der Kanal 5 durch die Lüftungsklappe 8 verschlossen ist. Dabei ragt die Lüftungsklappe 8 mit dem Spoiler 10 in Richtung der aus dem Heizelement 2 ausströmenden und mit der oberhalb des Heizelements 2 entlang strömenden und gemischten Luftströmung L. Eine Dichtung 12, welche an dem, dem Spoiler 10 entgegen gesetzten Ende der Klappe 8 ausgebildet ist und welche die Lüftungsklappe 8 vollständig umläuft, führt zu einer vollständigen Abdichtung gegen die Luftströmung L. Dabei liegt die Dichtung 12 einmal an dem Ende des ersten Teils der parabelförmigen Verlängerung 7 an, während an der Gehäusewandung 4 ein Klappenanschlag 11 ausgebildet ist, gegenüber welchem die Dichtung 12 positioniert ist und diesen kontaktiert. Durch die parabelähnliche Ausgestaltung des Luftklappenelementes 3 werden Strömungsabrisse der Luftströmung L und somit eine Wirbelbildung bei der Umlenkung der Luftströmung L um annähernd 180° minimiert, so dass die Strömungsgeschwindigkeiten reduziert werden, wodurch in Folge auch der Druckverlust und akustische Nachteile unterbunden werden.

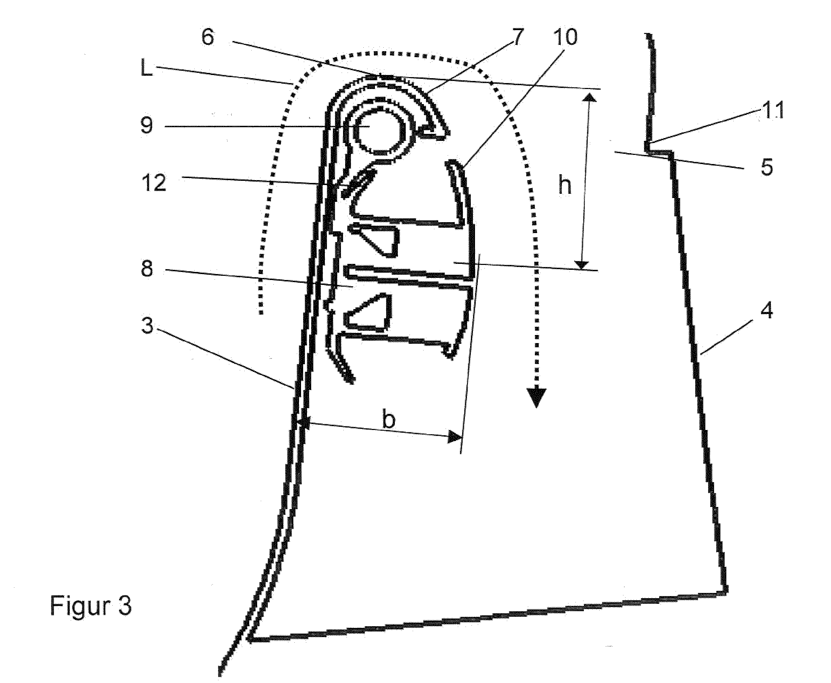

In Figur 3 sind die Abmaße des erfindungsgemäßen Luftumlenkelementes 3 verdeutlicht. Dabei stellt die Breite b den breitesten Abstand der parabelförmigen Verlängerung in Höhe der Lüftungsklappe 8 zur geraden Ausrichtung des Luftumlenkelementes 3 dar. Die Höhe h bestimmt den Abstand zwischen dem Scheitelpunkt 6 des Luftumlenkelementes 3 zu dem breitesten Abstand b. Für eine optimale Luftströmung L ist es von Vorteil, wenn das Luftumlenkelement 3 so dimensioniert ist, dass das Verhältnis von

$$b/h > 0{,}1$$

ist.

Dabei ist der breiteste Abstand b von der Strömungsgeschwindigkeit der umgelenkten Luftströmung abhängig. Je größer die Strömungsgeschwindigkeit ist, umso größer muss b gewählt werden.

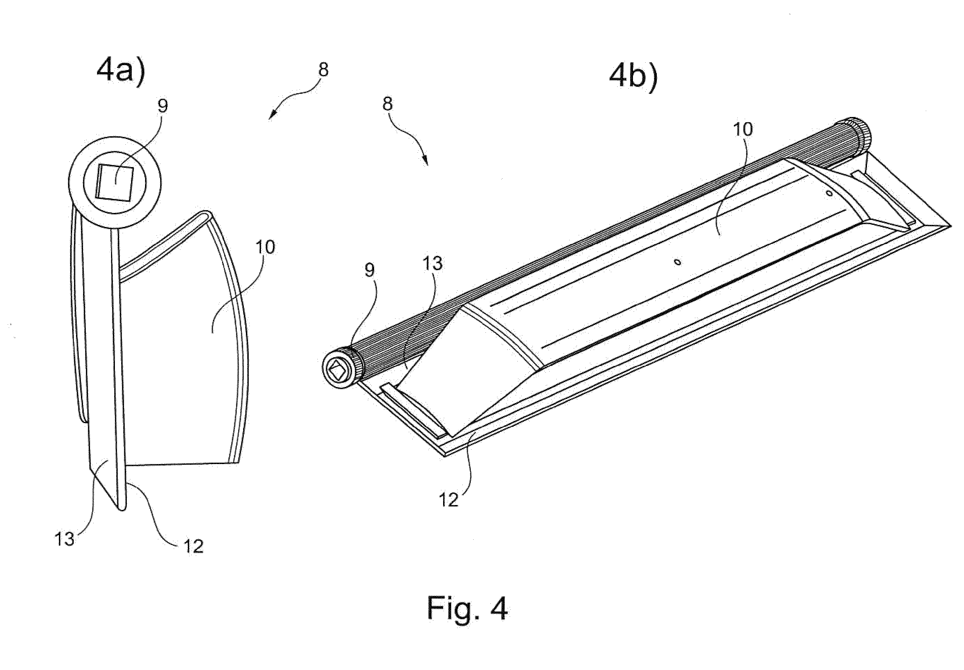

Figur 4a zeigt eine Seitenansicht der Lüftungsklappe 8. Dabei ist der Spoiler 10 auf dem Flügel 13 der Lüftungsklappe 8 angeordnet, und erstreckt sich von dem Flügel 13 weg. Der Flügel 13 ist mit der Drehachse 9 verbunden, die gemäß Figur 1 nahe dem Scheitelpunkt 6 des Luftumlenkelementes 3 positioniert ist. Die von dem Flügel 13 abgewandte Krümmung des Spoilers 10 weist dabei die Fortsetzung der Krümmung des ersten Teiles 7 der parabelförmigen Verlängerung des Luftumlenkelementes 3 auf und ermöglicht somit den gewünschten aerodynamischen Effekt.

Figur 4b zeigt eine perspektivische Ansicht der Erstreckung des Spoilers 10, auf dem Flügel 13 entlang der Drehachse 9.

Aufgrund der speziellen aerodynamischen Ausgestaltung des Luftumlenkelementes 3 in Kombination mit dem Spoiler 10 der Lüftungsklappe 8 wird ein Luftumlenkelement geschaffen, welches eine strömungsgünstige Kontur aufweist. Ablösungen und Turbulenzen der Luftströmung L, wie sie gemäß dem Stand der Technik bei eckigen und abgekanteten Luftumlenkelementen auftreten, werden sicher verhindert, indem der Druckabfall reduziert und akustische Nachteile unterbunden werden.

**Patentansprüche**

1. Luftumlenkelement mit einer strömungsoptimierten Kontur für eine Klimaanlage, insbesondere eines Kraftfahrzeuges, welches sich annähernd senkrecht zu einer Luftströmungsrichtung erstreckt, wobei sich an ein Ende des Luftumlenkelementes (3) eine annähernd parabelähnliche Verlängerung (6, 7, 8) anschließt, welche der Seite des Luftumlenkelementes (3) gegenüber liegt, die zu der Luftströmungsrichtung abgewandt ist, und die parabelähnliche Verlängerung (6, 7, 8) zweiteilig aufgebaut ist, wobei ein erster Teil (6, 7) der Verlängerung, welcher den Scheitelpunkt (6) einschließt, Bestandteil des Luftumlenkelementes (3) ist, während ein zweiter Teil (8) der Verlängerung, welcher sich an das erste Teil (6, 7) anschließt, von einem separaten Luftführungselement (8) gebildet ist, **dadurch gekennzeichnet, dass** das Luftführungselement (8) als Luftklappe ausgebildet ist, welche im geöffneten Zustand einen Kanal (5) zwischen dem Luftumlenkelement (3) und einer Gehäusewand (4) der Klimaanlage (1) zur Umlenkung einer Luftströmung (L) um annähernd 180° freigibt.

2. Luftumlenkelement nach Anspruch 1, **dadurch gekennzeichnet, dass** ein Verhältnis eines breitesten Abstandes b der parabelähnlichen Verlängerung (6, 7, 8) zum Luftumlenkelement (3) zum Abstand h eines Scheitelpunktes (6) der parabelähnlichen Verlängerung (6, 7, 8) zu dem breitesten Abstand größer als 0,1 ist.

3. Luftumlenkelement nach Anspruch 1 oder 2, **dadurch gekennzeichnet, dass** die parabelähnliche Verlängerung (6, 7, 8) integrierter Bestandteil des Luftumlenkelementes (3) ist.

4. Luftumlenkelement nach Anspruch 1, 2 oder 3, **dadurch gekennzeichnet, dass** das Luftführungselement (8) in einem von dem Luftumlenkelement (3) und der parabelähnlichen Verlängerung (6, 7, 8) gebildeten Zwischenraum angeordnet ist, wobei eine Außenkontur (10) des Luftführungselementes (8) das zweite Teil der parabelähnlichen Verlängerung bildet.

5. Luftumlenkelement nach Anspruch 1, 2, 3 oder 4, **dadurch gekennzeichnet, dass** eine Drehachse (9) der Lüftungsklappe (8) nahe dem Scheitelpunkt (6) des ersten Teiles (6, 7) der parabelähnlichen Verlängerung axial zu diesem angeordnet ist

6. Luftumlenkelement nach einem der Ansprüche 1 bis 5, **dadurch gekennzeichnet, dass** die, das zweite Teil (8) der parabelähnlichen Verlängerung bildende Außenkontur der Lüftungsklappe (8) von einem Spoiler (10) gebildet ist.

**7.** Luftumlenkelement nach Anspruch 6, **dadurch gekennzeichnet, dass** die Lüftungsklappe (8) auf einem, zu dem Spoiler (10) entgegen gesetzten Ende eines, den Spoiler (10) tragenden Flügels (13) eine Dichtung (12) aufweist.

**8.** Luftumlenkelement nach mindestens einem der vorhergehenden Ansprüche, **dadurch gekennzeichnet, dass** das Luftumlenkelement (3) mit einer, der parabelähnlichen Verlängerung (6, 7, 8) abgewandten Seite vor einem Heizelement (2) der Klimaanlage (1) angeordnet ist.

## Claims

**1.** An air-diverting element with a flow-optimised contour for an air-conditioning system, in particular of a motor vehicle, which extends approximately perpendicular to an air flow direction, wherein one end of the air-diverting element (3) is adjoined by an approximately quasi-parabolic elongation (6, 7, 8) which is opposite the side of the air-diverting element (3) which faces away from the air flow direction and the quasi-parabolic elongation (6, 7, 8) is made in two parts, wherein a first part (6, 7) of the elongation which includes the apex (6) is a constituent part of the air-diverting element (3) whilst a second part (8) of the elongation which adjoins the first part (6,7) is formed by a separate air-guide element (8), **characterised in that** the airguide element (8) is formed as an air flap which in the opened position releases a channel (5) between the air-diverting element (3) and a housing wall (4) of the air-conditioning system (1) for diverting an air flow (L) by approximately 180°.

**2.** The air-diverting element as claimed in claim 1, **characterised in that** a ratio of a broadest distance b of the quasi-parabolic elongation (6, 7, 8) to the air-diverting element (3) to the distance h of an apex (6) of the quasi-parabolic elongation (6, 7, 8) to the broadest distance is greater than 0.1.

**3.** The air-diverting element as claimed in claim 1 or 2, **characterised in that** the quasi-parabolic elongation (6, 7, 8) is an integrated constituent part of the air-diverting element (3).

**4.** The air-diverting element as claimed in claim 1, 2 or 3, **characterised in that** the air-guide element (8) is disposed in an interspace formed by the air-diverting element (3) and the quasi-parabolic elongation (6, 7, 8), wherein an outer contour (10) of the air-guide element (8) forms the second part of the quasi-parabolic elongation.

**5.** The air-diverting element as claimed in claim 1, 2, 3 or 4, **characterised in that** a rotational axis (9) of the ventilation flap (8) is arranged close to the apex (6) of the first part (6, 7) of the quasi-parabolic elongation and axially relative to the latter.

**6.** The air-diverting element as claimed in one of claims 1 to 5, **characterised in that** the outer contour of the ventilation flap (8) forming the second part (8) of the quasi-parabolic elongation is formed by a spoiler (10).

**7.** The air-diverting element as claimed in claim 6, **characterised in that** the ventilation flap (8) has a seal (12) at one end of a vane (13) supporting the spoiler (10) and opposite the spoiler (10).

**8.** The air-diverting element as claimed in at least one of the preceding claims, **characterised in that** a side of the air-diverting element (3) facing away from the quasi-parabolic elongation (6, 7, 8) is arranged in front of a heating element (2) of the airconditioning system (1).

## Revendications

**1.** Elément déflecteur redirigeant l'air, ledit élément ayant un contour optimisé pour l'écoulement prévu pour un système de climatisation, en particulier d'un véhicule automobile, lequel élément déflecteur redirigeant l'air s'étend de façon presque perpendiculaire à une direction d'écoulement de l'air, où un prolongement (6, 7, 8) presque semblable à une parabole se rattache à une extrémité de l'élément déflecteur redirigeant l'air (3), prolongement qui se trouve à l'opposé du côté de l'élément déflecteur redirigeant l'air (3), côté qui est orienté dans le sens opposé à la direction d'écoulement de l'air, et le prolongement (6, 7, 8) semblable à une parabole est constitué de deux parties, où une première partie (6, 7) du prolongement, qui englobe le sommet (6), fait partie de l'élément déflecteur redirigeant l'air (3), tandis qu'une seconde partie (8) du prolongement, qui se rattache à la première partie (6, 7), est formée par un élément de guidage d'air séparé (8), **caractérisé en ce que** l'élément de guidage d'air (8) est conçu comme un volet d'air qui, à l'état ouvert, libère un canal (5) formé entre un élément déflecteur redirigeant l'air (3) et une paroi de carter (4) du système de climatisation (1), ledit volet d'air servant à la redirection d'un écoulement d'air (L) se produisant presque à 180°.

**2.** Elément déflecteur redirigeant l'air selon la revendication 1, **caractérisé en ce qu'**un rapport d'une distance b - la plus large - du prolongement (6, 7, 8) semblable à une parabole, jusqu'à l'élément déflecteur redirigeant l'air (3), relativement à la distance h d'un sommet (6) du prolongement (6, 7, 8) semblable à une parabole, jusqu'à la distance la plus large, est supérieur à 0,1.

3. Elément déflecteur redirigeant l'air selon la revendication 1 ou 2, **caractérisé en ce que** le prolongement (6, 7, 8) semblable à une parabole est un composant intégré de l'élément déflecteur redirigeant l'air (3).

4. Elément déflecteur redirigeant l'air selon la revendication 1, 2 ou 3, **caractérisé en ce que** l'élément de guidage d'air (8) est disposé dans un espace intermédiaire formé par l'élément déflecteur redirigeant l'air (3) et par le prolongement (6, 7, 8) semblable à une parabole, où un contour extérieur (10) de l'élément de guidage d'air (8) forme la seconde partie du prolongement semblable à une parabole.

5. Elément déflecteur redirigeant l'air selon la revendication 1, 2, 3 ou 4, **caractérisé en ce qu'**un axe de rotation (9) du volet de ventilation (8) est disposé à proximité du sommet (6) de la première partie (6, 7) du prolongement semblable à une parabole, ledit axe de rotation étant disposé axialement par rapport à ce sommet.

6. Elément déflecteur redirigeant l'air selon l'une quelconque des revendications 1 à 5, **caractérisé en ce que** le contour extérieur du volet de ventilation (8), constituant la seconde partie (8) du prolongement semblable à une parabole, est formé par un becquet (10).

7. Elément déflecteur redirigeant l'air selon la revendication 6, **caractérisé en ce que** le volet de ventilation (8) présente un joint d'étanchéité (12) placé sur une extrémité d'une ailette (13) supportant le becquet (10), ladite extrémité étant située à l'opposé du becquet (10).

8. Elément déflecteur redirigeant l'air selon au moins l'une quelconque des revendications précédentes, **caractérisé en ce que** l'élément déflecteur redirigeant l'air (3), par un côté placé à l'opposé du prolongement (6, 7, 8) semblable à une parabole, est disposé en amont d'un élément chauffant (2) du système de climatisation (1).

Figur 1

Figur 2

EP 2 683 564 B1

Figur 3

4b)

10

13

9

8

8

12

4a)

9

10

12

13

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050247445 A1